(19) Europäisches Patentamt
European Patent Office
Office européen des brevets

(11) **EP 2 391 052 A1**

(12) **DEMANDE DE BREVET EUROPEEN**

(43) Date de publication:
**30.11.2011 Bulletin 2011/48**

(51) Int Cl.:
***H04L 9/00*** *(2006.01)*

(21) Numéro de dépôt: **11167594.8**

(22) Date de dépôt: **26.05.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **26.05.2010 FR 1002212**

(71) Demandeur: **Oberthur Technologies
92300 Levallois-Perret (FR)**

(72) Inventeurs:
• **Prouff, Emmanuel
75018 Paris (FR)**
• **Rivain, Matthieu
75017 Paris (FR)**

(74) Mandataire: **Santarelli
14 Avenue de la Grande Armée
B.P. 237
75822 Paris Cedex 17 (FR)**

(54) **Procédé d'évaluation d'une fonction et dispositif associé**

(57) Un procédé d'évaluation d'une fonction d'un corps fini de caractéristique p sur lui-même, en un élément x du corps, utilise une évaluation, pour ledit élément x, d'un polynôme formé d'une pluralité de monômes.

L'évaluation du polynôme comprend les étapes suivantes :
- détermination de monômes dont le degré est une puissance entière de la caractéristique p au moyen d'élévations successives de l'élément x à la puissance p ;
- détermination de monômes dont le degré est différent d'une puissance entière de la caractéristique p sur la base des monômes déterminés, dont le degré est une puissance entière de la caractéristique p, et au moyen d'au moins une multiplication.

Un dispositif d'évaluation est également proposé.

## Description

L'invention concerne un procédé d'évaluation d'une fonction sur un corps fini et un dispositif associé.

Certains procédé de traitement de données (comme par exemple les procédés de traitement cryptographique de données tel que l'algorithme AES) utilisent des fonctions sur un corps fini. Les données manipulées sont alors considérées comme des éléments du corps fini et la fonction considérée permet donc de transformer une donnée (élément du corps) en une autre donnée (autre élément du corps, résultat de l'application de la fonction concernée à l'élément précité).

Du fait du fonctionnement en logique binaire des circuits électroniques (par exemple microprocesseurs) utilisés pour le traitement, on utilise fréquemment les corps finis (ou corps de Galois) $F_2{}^n$ de caractéristique 2 à $2^n$ éléments (par exemple avec n=8 lorsque les données sont représentées par des octets). On s'intéresse toutefois ici à tout corps fini, dont le cardinal peut nécessairement s'écrire sous la forme $p^n$ : p est un nombre premier connu comme la caractéristique du corps.

Les inventeurs proposent tout d'abord d'utiliser la propriété selon laquelle, comme expliqué dans la suite, toute fonction sur le corps peut s'écrire comme un polynôme de degré $p^n$ -1.

Afin d'obtenir un procédé de traitement de données au sein duquel l'évaluation de la fonction concernée soit suffisamment rapide, il est donc nécessaire d'optimiser les calculs permettant d'évaluer le polynôme associé à la fonction concernée.

Des travaux ont déjà été menés sur ce sujet, comme par exemple le rapport "Analyse et implantation d'algorithmes rapides pour l'évaluation polynomiale sur les nombres flottants", de G. Revy, Laboratoire de l'Informatique du Parallélisme, ENS Lyon, 2006.

Dans ce contexte, l'invention propose un procédé d'évaluation d'une fonction d'un corps fini de caractéristique p (p étant typiquement un entier premier supérieur ou égal à 2) sur lui-même, en un élément x du corps, caractérisé en ce qu'il comprend une évaluation, pour ledit élément x, d'un polynôme formé d'une pluralité de monômes et en ce que l'évaluation du polynôme comprend les étapes suivantes :

- détermination de monômes dont le degré est une puissance entière de la caractéristique p au moyen d'élévations successives de l'élément x à la puissance p ;
- détermination de monômes dont le degré est différent d'une puissance entière de la caractéristique p sur la base des monômes déterminés, dont le degré est une puissance entière de la caractéristique p, et au moyen d'au moins une multiplication (typiquement par un desdits monômes déterminés dont le degré est une puissance entière de la caractéristique p, mais également en outre par l'élément x lui-même afin d'obtenir les monômes de degré impair).

L'évaluation du polynôme est ainsi basée sur des opérations d'élévation à la puissance p, linéaires vis-à-vis de l'addition dans un corps de caractéristique p. En effet, on a dans un tel corps : $(a+b)^p = a^p + b^p$.

Les monômes qui ne peuvent être directement obtenus par de telles opérations sont déterminés par multiplications de monômes du type $x^{pi}$, obtenus quant à eux par de telles opérations ; les multiplications sont donc en nombre réduit.

Par exemple, l'étape de détermination de monômes dont le degré est une puissance entière de la caractéristique p met en oeuvre au moins deux élévations successives de l'élément x à la puissance p de manière à déterminer $x^{p2}$.

L'évaluation du polynôme inclut un processus du type comprenant l'évaluation d'un premier polynôme pour l'élément $x^p$, l'évaluation d'un second polynôme pour l'élément $x^p$, le produit du second polynôme évalué par l'élément x et la somme dudit produit et du premier polynôme évalué.

Comme expliqué ci-après, on utilise ainsi le fait que l'on peut écrire le polynôme f(x) sous forme d'une somme comprenant au moins les termes $P_1(x^p) \otimes P_2(x^p) \otimes x$. Précisément, on peut écrire :

$$f(x)= P_1(x^p) \oplus P_2(x^p) \otimes x \oplus \ldots \oplus P_p(x^p) \otimes x^{p-1}.$$

L'évaluation du premier polynôme (de même qu'éventuellement celle du second polynôme) peut elle aussi être mise en oeuvre par un processus dudit type. En effet, le premier polynôme $P_1(X)$ peut s'écrire comme une somme comprenant $P_{11}(X^p) \oplus P_{12}(X^p) \otimes X$.

On peut ainsi par récursivité traiter chaque polynôme à évaluer : l'évaluation de chaque polynôme à évaluer peut dans ce cas inclure un processus dudit type.

La solution proposée est intéressante notamment lorsque l'on cherche à minimiser le nombres d'opérations non-linéaires par rapport à l'addition. C'est le cas en particulier lorsque les données à traiter sont manipulées sous forme masquée.

En effet, afin d'éviter que des personnes malintentionnées puissent déduire de l'observation d'un circuit électronique les données que ce circuit manipule (principalement dans le domaine de la cryptographie), il est connu de masquer les données manipulées au moyen d'une valeur aléatoire (typiquement par combinaison de la donnée à traiter et de la valeur aléatoire au moyen d'une opération de ou exclusif, également dénommée XOR) de telle sorte que les données effectivement manipulées par le dispositif électronique diffèrent à chaque mise en oeuvre de l'algorithme concerné, même lorsque l'attaquant tente à dessein de faire reproduire l'algorithme à l'identique.

L'opération de masquage peut correspondre à l'addition dans le corps fini considéré ici.

Afin de lutter encore plus efficacement contre les attaques, on a prévu d'utiliser plusieurs masques pour masquer une même donnée, typiquement de sorte que la somme (au moyen de l'opération XOR) de la donnée masquée et de l'ensemble des masques permette de retrouver la donnée originale.

La donnée originale est alors en quelque sorte représentée au cours des calculs par d valeurs (dont d-1 valeurs proviennent de tirages aléatoires et dont la somme vaut la donnée originale, c'est-à-dire non masquée).

On peut donc dire en résumé que dans ce cas l'élément x est représenté par d éléments $x_i$ dont la somme sur le corps fini est égale à l'élément x. On peut donc considérer l'un des éléments $x_i$ comme la donnée masquée et les (d-1) autres éléments $x_i$ comme des masques utilisés dans le cadre du processus de masquage.

Le traitement de telles données représentées par une pluralité de valeurs doit être tel que les opérations appliquées à ces valeurs résultent au final au traitement souhaité pour la somme de ces valeurs, ce qui ne pose pas de difficulté lorsque la fonction à appliquer est linéaire vis-à-vis de l'opération d'addition (puisqu'il suffit alors d'appliquer le traitement souhaité à chacune des valeurs représentant la donnée afin d'obtenir les différentes valeurs représentant le résultat de l'opération). Comme déjà indiqué, c'est le cas notamment de l'opération d'élévation à la puissance p.

Les multiplications prévues ci-dessus sont toutefois non-linéaires. On propose donc en outre un procédé de détermination d'une représentation du produit d'un premier élément et d'un second élément (dans l'ensemble fini précité, typiquement de cardinal strictement supérieur à deux et dans lequel sont définies une addition et une multiplication commutative et distributive par rapport à l'addition), le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, comprenant les étapes suivantes :

- pour chaque couple formé d'un premier entier compris entre 1 et d et d'un second entier strictement supérieur au premier entier, obtention d'une valeur au moyen des sous-étapes suivantes :

    o tirage d'une valeur aléatoire associée au couple ;
    o première addition de ladite valeur aléatoire et du produit de la première valeur associée au premier entier et de la seconde valeur associée au second entier ;
    o seconde addition du résultat de la première addition et du produit de la première valeur associée au second entier et de la seconde valeur associée au premier entier ;

- pour chaque entier compris entre 1 et d, détermination de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

On propose ainsi d'utiliser une multiplication entre éléments de l'ensemble, c'est-à-dire entre données ; toute fonction, notamment non-linéaire, sur l'ensemble peut être écrite sous une forme utilisant de telles multiplications comme expliqué plus loin.

Le procédé proposé ci-dessus permet d'effectuer une telle multiplication entre deux éléments masqués à l'ordre d-1, sans compromettre le masquage utilisé.

On remarque que la définition donnée ci-dessus propose d'associer des valeurs à des entiers compris entre 1 et d (autrement dit de repérer des valeurs avec des indices variant de 1 à d) alors que la description qui suit utilise une indexation variant de 0 à d-1. Les indices utilisés en pratique ne sont naturellement que des éléments de mise en oeuvre de l'invention qui ne se limite pas à une indexation particulière. L'association des différentes valeurs à des entiers compris entre 1 et d, telle que prévue dans les revendications, entend toute indexation envisageable en pratique.

L'addition est par exemple une opération de type ou exclusif. Par ailleurs, la multiplication peut être une multiplication de polynômes à coefficients binaires suivie d'une étape de réduction par un polynôme à coefficients binaires irréductible. La multiplication peut en variante être définie comme suit : chaque élément non nul de l'ensemble fini étant une puissance donnée d'un élément primitif, la multiplication peut alors être réalisée par une addition des exposants respectivement associés aux puissances à multiplier, modulo le cardinal du corps moins un. Si au moins l'un des éléments est nul, alors le produit retourne tout simplement zéro.

En pratique, le produit de deux éléments de l'ensemble est par exemple obtenu par lecture, au sein d'une table mémorisée, d'un élément associé auxdits deux éléments.

S'agissant de masques, (d-1) valeurs parmi les d premières valeurs sont par exemple obtenues par tirage aléatoire.

Le procédé proposé ici est typiquement mis en oeuvre par un circuit électronique, par exemple un microprocesseur, avec les avantages associés à ce type de mise en oeuvre ; en variante, il pourrait s'agir d'un circuit intégré à application spécifique. Ledit élément, le premier élément et le second élément sont typiquement des données codées chacune sur une pluralité de bits et manipulées par le microprocesseur.

L'ensemble peut être un corps de Galois $F_2^n$, avec n supérieur ou égal à 1, typiquement n supérieur ou égal à 2, par exemple égal à 8.

L'invention propose également un dispositif d'évaluation d'une fonction d'un corps fini de caractéristique p sur lui-même, en un élément x du corps, avec évaluation, pour ledit élément x, d'un polynôme formé d'une pluralité de monômes, comprenant : des moyens de détermination de monômes dont le degré est une puissance entière de la caractéristique p au moyen d'élévations successives de l'élément x à la puissance p ; des moyens de détermination de monômes dont le degré est différent d'une puissance entière de la caractéristique p sur la base des monômes déterminés, dont le degré est une puissance entière de la caractéristique p, et au moyen d'au moins une multiplication.

Ladite multiplication vise par exemple un premier élément et un second élément du corps fini, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d ; le dispositif peut alors comprendre :

- des moyens d'obtention, pour chaque couple formé d'un premier entier compris entre 1 et d et d'un second entier strictement supérieur au premier entier, d'une valeur :

    o par tirage d'une valeur aléatoire associée au couple ;
    o par première addition de ladite valeur aléatoire et du produit de la première valeur associée au premier entier et de la seconde valeur associée au second entier ;
    o par seconde addition du résultat de la première addition et du produit de la première valeur associée au second entier et de la seconde valeur associée au premier entier ;

- des moyens de détermination, pour chaque entier compris entre 1 et d, de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

D'autres caractéristiques et avantages de l'invention apparaitront à la lumière de la description qui suit, faite en référence aux dessins annexés dans lesquels :

- la figure 1 représente un exemple de dispositif susceptible de mettre en oeuvre l'invention ;
- la figure 2 représente un procédé mis en oeuvre par le dispositif de la figure 1 et conforme aux enseignements de l'invention.

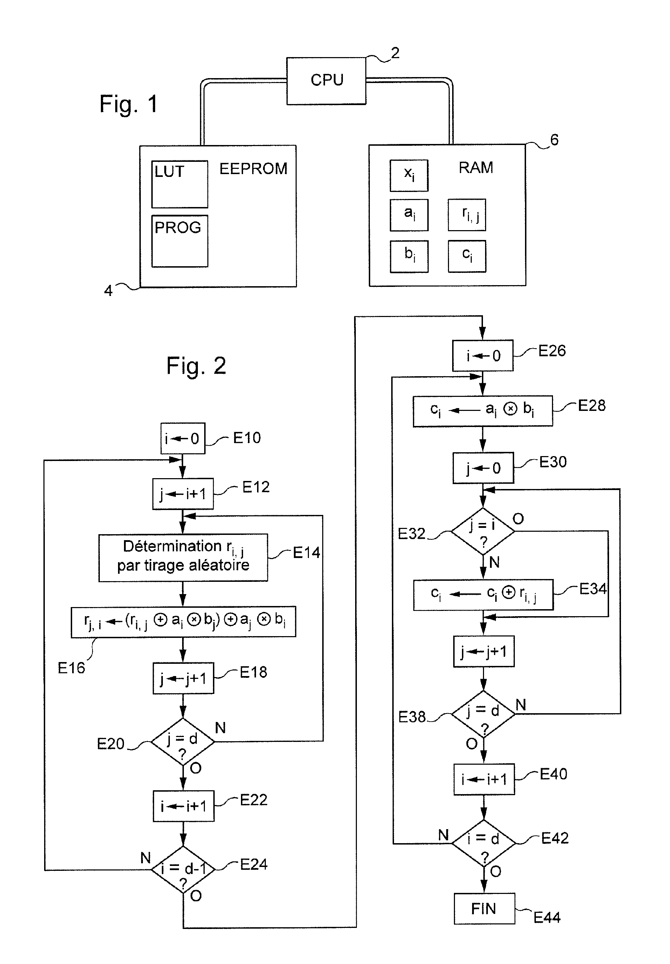

La **figure 1** représente les éléments principaux d'un dispositif apte à mettre en oeuvre le procédé proposé par l'invention.

Ce dispositif comprend un microprocesseur 2 connecté (à travers des bus adéquats) d'une part à une mémoire réinscriptible 4 (typiquement de type EEPROM) et à une mémoire vive 6.

Le dispositif de la figure 1 est par exemple un micro-ordinateur. En variante, il pourrait s'agir d'un autre type de dispositif électronique, par exemple sécurisé, telle qu'une carte à microcircuit.

La mémoire réinscriptible 4 contient notamment des instructions d'un programme d'ordinateur PROG qui, lorsqu'elles sont exécutées par le microprocesseur 2, permettent la mise en oeuvre des procédés proposés par l'invention, tel que celui décrit ci-après.

Le programme d'ordinateur PROG pourrait en variante être mémorisé sur un autre support de données (par exemple un disque dur), éventuellement amovible (par exemple un disque optique ou une mémoire amovible). Dans ce cas, le programme d'ordinateur PROG peut éventuellement être d'abord transféré dans la mémoire vive 6 avant son exécution par le microprocesseur 2.

Lors de son exécution par le microprocesseur 2, le programme d'ordinateur PROG met en oeuvre un procédé de traitement cryptographique de données qui implique notamment une donnée x à traiter.

Les données à traiter (notamment la donnée x) sont représentées au sein du dispositif de la figure 1 (et notamment de la mémoire vive 6) par des mots numériques formés chacun de plusieurs bits ; on utilise ici par exemple une représentation des données sous forme d'octets.

La mémoire vive 6 mémorise les variables et données traitées, notamment celles manipulées par le procédé décrit plus loin en référence à la figure 2.

Dans le cadre de leur traitement (en particulier lorsqu'il s'agit d'un traitement cryptographique), les données sont (chacune) vues comme des éléments d'un ensemble $F_{2^n}$ comprenant $2^n$ éléments et muni d'une structure de corps à travers la définition d'une part d'une addition entre deux éléments de l'ensemble (notée $\oplus$ dans la suite) et d'autre part d'une multiplication de deux éléments de l'ensemble (notée $\otimes$).

On comprend que, dans le cas décrit ici où les données sont représentées par des octets, le corps $F_{2^n}$ comprend 256 éléments (n = 8).

L'addition $\oplus$ définie sur ce corps est l'opération "*ou exclusif*" ou XOR (qui est une opération de base du fonctionnement du microprocesseur 2).

La multiplication $\otimes$ entre deux éléments (c'est-à-dire entre deux données codées sur plusieurs bits, typiquement 8 bits) peut quant à elle être définie comme une multiplication polynomiale modulaire, ou comme la multiplication de deux puissances d'un élément primitif (ou générateur) du corps (auquel cas, cette multiplication se ramène à une addition de deux exposants de l'élément primitif modulo $2^n - 1$). On peut se référer à ce propos à l'ouvrage *"Finite fields"*, volume 20 de l'*"Encyclopedia of mathematics and its applications"*, de Rudolph Lidl and Harald Niederreiter, Cambridge University Press, 2ème édition, 1997.

Quelle que soit la représentation théorique utilisée, la multiplication est ici mise en oeuvre au moyen d'une table mémorisée (ici dans la mémoire réinscriptible 4). Une telle table, dénotée LUT (de l'anglais *"Look-Up Table"*), mémorise, pour tout couple d'éléments du corps, le résultat de la multiplication de ces éléments. En variante, dans le cas où on utilise les puissances d'un élément primitif, on peut avoir recours à deux tables logarithmiques.

Dans ce contexte, un traitement d'une donnée qui réalise la transformation de cette donnée en une autre donnée peut être vu comme une fonction du corps sur lui-même (c'est-à-dire une fonction f qui associe à tout élément x du corps, c'est-à-dire à toute donnée envisageable, un élément f(x) du corps, c'est-à-dire la donnée obtenue par le traitement).

On utilise par ailleurs dans le dispositif de la figure 1 une technique de masquage selon laquelle une donnée déterminée x est manipulée seulement sous forme masquée par un ou plusieurs masque(s) $x_i$ (i > 0), typiquement déterminés par tirage aléatoire au début du traitement (c'est-à-dire en pratique au début de l'algorithme concerné, que l'on souhaite protéger par le masquage). Les masques peuvent par ailleurs être régénérés si nécessaire au cours du traitement. Cette technique est équivalente aux techniques dites de partage de secrets ou de calcul par plusieurs parties (en anglais *"multi-party computation"*) souvent utilisées en cryptographie.

Le masquage utilisé ici est l'addition successive (par application de l'opération XOR) des masques $x_i$ à la donnée x à masquer.

Un tel masquage est dit d'ordre supérieur lorsque plusieurs masques $x_i$ sont successivement appliqués à la donnée x.

Dans ce cas, la donnée x est comme représentée lors du fonctionnement par d données $x_i$, à savoir la donnée masquée $x_0$ et les masques $x_i$, $x_2$, ..., $x_{d-1}$. (Les masques doivent en effet être mémorisés pour pouvoir retrouver la valeur sans masquage x). On parle de masquage d'ordre (d-1).

La donnée x est donc représentée lors du traitement par d données $x_i$ dont la somme (au sens de l'addition $\oplus$ définie sur le corps mentionné ci-dessus) est égale à la donnée x ainsi représentée :

$$x_0 \oplus x_1 \oplus x_2 \oplus \ldots \oplus x_{d-1} = x.$$

Comme déjà expliqué en introduction, du fait du tirage aléatoire des masques à chaque exécution d'un algorithme, le masquage permet de modifier les valeurs manipulées lors des différentes exécutions de l'algorithme et rend difficile (voir impossible) la déduction des données effectivement traitées à partir de l'observation du circuit, avec une difficulté croissante en fonction de l'ordre de masquage.

Le masquage implique toutefois en revanche un traitement particulier lorsque l'on doit appliquer à la donnée à traiter x (et donc en pratique aux données effectivement manipulées $x_i$) une fonction f non-linéaire par rapport à l'opération de masquage (ici l'addition $\oplus$, réalisée par une opération XOR). En effet, contrairement au cas des fonctions linéaires par rapport à cette opération, la somme des résultats $f(x_i)$ de l'application de la fonction f aux données manipulées $x_i$ est (par définition même de l'absence de linéarité) différente du résultat f(x) de l'application de la fonction à la donnée traitée x.

On propose ci-dessous un procédé qui permet d'obtenir, à partir des données $x_i$ (où $x_0 \oplus x_1 \oplus x_2 \oplus \ldots \oplus x_{d-1}$

= x), des données $e_i$ dont la somme sera égale à f(x) tout en conservant tout au long du calcul le masquage d'ordre (d-1).

On remarque tout d'abord que la formule d'interpolation de Lagrange permet de définir un polynôme p(x) égal à la fonction f(x) en chaque élément de l'ensemble $F_{2^n}$ : 1

$$p(x) = \bigoplus_{a \in F_{2^n}} [f(a) \otimes \prod_{b \in F_{2^n}, b \neq a} \frac{x-b}{a-b}],$$

où le produit multiple $\Pi$ utilise la multiplication $\otimes$ et où $\dfrac{x-b}{a-b}$ est le produit (au sens de la multiplication $\otimes$ de l'élément *(x - b)* par l'inverse (toujours au sens de la multiplication $\otimes$) de *l'élément (a - b)*. On remarque que la formule ci-dessous est rédigée sous sa forme générale (avec soustraction), mais que, dans les ensembles de type $F_{2^n}$ étudiés ici, la soustraction (symbole "-" ci-dessus) est également mise en oeuvre par une opération XOR, notée ici $\oplus$, du fait que l'application de l'opération XOR avec un élément donné (c'est-à-dire l'addition d'un élément donné) est involutive dans ce type d'ensembles.

D'après ce qui précède, la fonction f (notamment lorsqu'elle est non linéaire par rapport à l'addition $\oplus$) peut s'écrire sous forme d'un polynôme de degré $2^n$-1 et l'on peut donc définir la fonction f par une famille de coefficients $\alpha_i$ tels que :

$$f(x) = \bigoplus_{i=0}^{2^n-1} [\alpha_i \otimes \mathsf{x}^i],$$

où $x^0$ est l'élément neutre par rapport à la multiplication $\otimes$, $x^1$ est l'élément x et, pour i>1, $x^i$ est l'élément x multiplié (i-1) fois par lui-même (au moyen de l'opération $\otimes$).

Le traitement d'une donnée x par la fonction f peut ainsi se ramener à une combinaison d'additions $\oplus$ et de multiplications $\otimes$.

On propose toutefois ici un procédé original pour l'évaluation du polynôme défini ci-dessus.

En séparant les monômes de degrés pairs et de degré impairs dans la formule ci-dessus (*cf.* par exemple J. Eve, "The Evaluation of Polynomials", Numerische Mathematik, 6 :17-21, 1964), on peut écrire la fonction f sous la forme :

$$f(x) = \bigoplus_{j=0}^{2^{n-1}-1} (\alpha_{2j}.x^{2j}) \oplus [\bigoplus_{j=0}^{2^{n-1}-1} (\alpha_{2j+1}.x^{2j})] \otimes x \cdot$$

Autrement dit, la fonction *f* peut s'écrire au moyen de deux polynômes $P_1$ et $P_2$ de degré $2^{n-1}$-1 comme suit : $f(x) = P_1(x^2) \oplus P_2(x^2) \otimes x$.

En appliquant la même transformation à chacun des polynômes $P_1$ et $P_2$, on peut écrire :

$$P_1(x^2) = P_{11}(x^4) \oplus P_{12}(x^4) \otimes x^2 \text{ et } P_2(x^2) = P_{21}(x^4) \oplus P_{22}(x^4) \otimes x^2,$$

où $P_{11}$, $P_{12}$, $P_{21}$ et $P_{22}$ sont des polynômes de degré $2^{n-2}$-1.

En utilisant cette transformation de manière récursive, on réduit à chaque fois le degré des polynômes considérés (et donc des multiplications à réaliser pour évaluer ce polynôme de manière classique), mais on augmente le nombre de multiplications par un terme de forme $x^{2i}$ à effectuer.

Si r est le nombre de telles transformations effectuées, le degré des polynômes est $2^{n-r}$-1 et le nombre de multiplications à effectuer en dehors des polynômes est $2^r$. On obtient donc une formulation optimale de *f* pour le nombre de transformations r qui minimise l'expression $(2^{n-r-1}+2^r)$-2.

On propose d'utiliser une telle formulation pour évaluer la fonction *f*.

On comprend que, grâce aux transformations opérées, on évalue tout d'abord, grâce à de seules opérations d'élévation au carré (ou de manière plus générale, à une puissance égale à la caractéristique du corps) des monômes dont le degré est une puissance entière de la caractéristique du corps (ici la des monômes de la forme $x^{2i}$).

Les autres monômes du polynôme représentant la fonction f (c'est-à-dire les monômes de degré différent de $p^i$, ici $2^i$) sont alors obtenus, après application d'un polynôme de la forme $P_{jk}$... à un monôme $x^{p^i}$ déterminé ci-dessus,

par multiplication par un monôme $x^{p_{i-1}}$ déterminé ci-dessus (donc avec i>1). Comme indiqué ci-dessus (*cf.* la formule utilisant $P_1$ et $P_2$), les monômes de degré impair sont en outre obtenus par une ultime multiplication par x.

On doit à présent mettre en oeuvre cette évaluation à l'aide de la formulation à base de polynômes en conservant le masquage.

Les additions sont naturellement linéaires vis-à-vis de l'opération de masquage (ici constituées par la même opération XOR) et la sommation des différents éléments concernés peut donc être réalisée par une sommation des d données manipulées représentant ces éléments.

Il en va de même pour la multiplication par chacun des coefficients $\alpha_i$, également linéaire par rapport à l'opération de masquage, ainsi que pour l'opération de mise au carré. En effet, du fait que la caractéristique du corps est égale à 2 (c'est-à-dire que le nombre d'éléments du corps est de la forme $2^n$), on a : $(a \oplus b)^2 = a^2 \oplus b^2$.

Il convient en revanche de mettre en oeuvre un procédé spécifique pour déterminer le résultat des multiplications à mettre en oeuvre tout en conservant le masquage d'ordre (d-1) du fait de la non linéarité de l'opération de multiplication par rapport à l'opération de masquage.

Le procédé de multiplication d'un nombre a (représenté par d valeur $a_i$) et d'un nombre b (représenté par d valeurs $b_i$) proposé dans ce but est décrit à présent en référence à la **figure 2.**

On comprend que dans le cadre de l'évaluation de la fonction f décrite ci-dessus, qui n'est qu'une application possible de ce procédé, les données a et b sont toutes deux égales à la donnée à traiter x.

Le procédé débute à l'étape E10 par l'initialisation à 0 d'une variable i.

On procède alors à l'étape E12 à l'initialisation d'une variable j à la valeur i+1.

On détermine alors à l'étape E14 une variable $r_{i,j}$ par tirage aléatoire, typiquement en utilisant une fonction de génération de valeurs aléatoires réalisée sous forme logicielle et qui fait partie du programme PROG.

On calcule alors une variable $r_{j,i}$ selon la formule : $(r_{i,j} \oplus a_i \otimes b_j) \oplus a_j \otimes b_i$. On remarque que l'indice i est nécessairement différent de l'indice j dans cette formule (puisque j est initialisé à i+1 et incrémenté comme indiqué plus bas).

On rappelle que, selon une notation classique, la multiplication est prioritaire sur l'addition et que l'on effectue donc d'abord les multiplications $a_i \otimes b_j$ et $a_j \otimes b_i$, avant d'ajouter, au résultat de la première multiplication la valeur $r_{i,j}$ (au moyen d'un XOR), et d'ajouter enfin à cette somme le résultat de la seconde multiplication.

On remarque que le respect de cet ordre des opérations (en particulier des additions) est impératif si l'on veut conserver la sécurité du masquage.

On procède alors à l'étape E18 à l'incrémentation de la variable j.

On teste alors si la variable j est égale à d (qui représente comme indiqué précédemment le nombre de valeurs représentant une valeur à traiter).

Dans la négative (c'est-à-dire s'il reste des valeurs de j entre i+1 et d-1 qui n'ont pas été traitées), on reboucle à l'étape E14.

Dans l'affirmative, c'est-à-dire lorsque le dernier passage à l'étape E16 a été fait avec valeur de la variable j égale à d-1, on procède à l'étape suivante E22.

Cette étape E22 consiste à incrémenter la variable i.

On teste alors à l'étape E24 si la variable i est égale à (d-1). Dans la négative, on reboucle à l'étape E12 ce qui permet d'effectuer le traitement déjà décrit avec une valeur de i incrémentée. Dans l'affirmative, l'ensemble des valeurs $r_{i,j}$ ont été traitées (puisqu'il n'y a pas de valeurs $r_{i,i}$ à déterminer, et donc notamment pas de valeur $r_{d-1, d-1}$) et on procède alors à la seconde partie du procédé à l'étape E26.

L'étape E26 consiste à initialiser la variable i à 0.

On procède ensuite à l'étape E28 à laquelle on calcule le produit $a_i \otimes b_i$, que l'on mémorise dans une variable $c_i$.

On effectue alors l'étape E30 à laquelle on initialise la variable j à 0. A l'étape E32, on teste l'égalité entre les variables i et j.

Dans la négative, on ajoute (au moyen de l'opération $\oplus$) dans la variable $c_i$ la variable $r_{i,j}$ déterminée dans la première partie du procédé. Autrement dit, on calcule la somme $c_i \oplus r_{i,j}$, somme que l'on mémorise à nouveau (avec écrasement) dans la variable $c_i$.

Dans l'affirmative à l'étape E32 (c'est-à-dire si i=j), on procède directement (c'est-à-dire sans effectuer l'étape E34) à l'étape E36.

L'étape E34 est également suivie de l'étape E36, à laquelle on incrémente la variable j.

On teste alors à l'étape E38 si la variable j est égale à d. Dans la négative, on boucle à l'étape E32. Dans l'affirmative on passe à l'étape E40.

L'étape E40 consiste à incrémenter la variable i.

On procède ensuite à l'étape E42 à laquelle on teste si la variable i est égale à d.

Dans la négative, on boucle à l'étape E28 afin de déterminer la variable $c_i$ suivante.

Dans l'affirmative, toutes les variables $c_i$ (pour i variant de 0 à d-1) ont été déterminées et le procédé est donc terminé (étape E44).

Les d valeurs $c_i$ ainsi obtenues représentent le produit c, résultat de la multiplication $a \otimes b$, c'est-à-dire que :

$$c = a \otimes b \text{ et } c_0 \oplus c_1 \oplus c_2 \oplus \ldots \oplus c_{d-1} = c.$$

On remarque que cette dernière égalité peut être vérifiée comme suit en utilisant les propriétés de commutativité de la multiplication $\otimes$, et de distributivité de la multiplication $\otimes$ par rapport à l'addition $\oplus$ :

$$\bigoplus_{i=0}^{d-1} c_i = \bigoplus_{i=0}^{d-1} [a_i \otimes b_i \oplus (\bigoplus_{j \neq i} r_{i,j})] \qquad \text{grâce aux étapes E28 et E34, donc}$$

$$\bigoplus_{i=0}^{d-1} c_i = \bigoplus_{i=0}^{d-1} [a_i \otimes b_i \oplus (\bigoplus_{j > i} r_{i,j}) \oplus (\bigoplus_{j < i} (r_{j,i} \oplus a_i \otimes b_j \oplus a_j \otimes b_i))] \qquad \text{d'après E16, d'où}$$

$$\bigoplus_{i=0}^{d-1} c_i = \bigoplus_{i=0}^{d-1} [a_i \otimes b_i \oplus (\bigoplus_{j < i} (a_i \otimes b_j \oplus a_j \otimes b_i))] \qquad \text{puisque les } r_{i,j} \text{ s'annulent, soit}$$

$$\bigoplus_{i=0}^{d-1} c_i = (\bigoplus_{i=0}^{d-1} a_i) \otimes (\bigoplus_{i=0}^{d-1} b_i) = a \otimes b = c.$$

On a ainsi permis d'obtenir des valeurs représentant le produit c des valeurs a et b, tout en conservant le masquage d'ordre (d-1).

Le mode de réalisation qui vient d'être décrit n'est qu'un exemple possible de mise en oeuvre de l'invention, qui ne s'y limite pas. En particulier, l'invention ne se limite pas au cas des corps de type $F_2^n$ mais s'applique également dans le cas d'autres corps (dès lors que, comme indiqué ci-dessus, la solution repose sur les règles de commutativité et de distributivité dans le corps).

## Revendications

**1.** Procédé, mis en oeuvre par un circuit électronique, d'évaluation d'une fonction d'un corps fini de caractéristique p sur lui-même, en un élément x du corps,
**caractérisé en ce qu'**il comprend une évaluation, pour ledit élément x, d'un polynôme formé d'une pluralité de monômes et **en ce que** l'évaluation du polynôme comprend les étapes suivantes :

- détermination de monômes dont le degré est une puissance entière de la caractéristique p au moyen d'élévations successives de l'élément x à la puissance p ;
- détermination de monômes dont le degré est différent d'une puissance entière de la caractéristique p sur la base des monômes déterminés, dont le degré est une puissance entière de la caractéristique p, et au moyen d'au moins une multiplication.

**2.** Procédé d'évaluation selon la revendication 1, dans lequel l'élément x est représenté par d éléments $x_i$ dont la somme sur le corps fini est égale à l'élément x.

**3.** Procédé d'évaluation selon la revendication 1 ou 2, dans lequel ladite multiplication vise un premier élément et un second élément du corps fini, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, comprenant les étapes suivantes :

- pour chaque couple formé d'un premier entier compris entre 1 et d et d'un second entier strictement supérieur au premier entier, obtention d'une valeur au moyen des sous-étapes suivantes :

o tirage d'une valeur aléatoire associée au couple ;
o première addition de ladite valeur aléatoire et du produit de la première valeur associée au premier entier et de la seconde valeur associée au second entier ;
o seconde addition du résultat de la première addition et du produit de la première valeur associée au second entier et de la seconde valeur associée au premier entier ;

- pour chaque entier compris entre 1 et d, détermination de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

4. Procédé d'évaluation selon l'une des revendications 1 à 3, dans lequel l'addition sur le corps fini est une opération de type ou exclusif.

5. Procédé d'évaluation selon l'une des revendications 1 à 4, dans lequel ladite multiplication est une multiplication par un desdits monômes déterminés dont le degré est une puissance entière de la caractéristique p.

6. Procédé d'évaluation selon l'une des revendications 1 à 5, dans lequel l'étape de détermination de monômes dont le degré est une puissance entière de la caractéristique p met en oeuvre au moins deux élévations successives de l'élément x à la puissance p de manière à déterminer $x^{p2}$.

7. Procédé d'évaluation selon l'une des revendications 1 à 6, dans lequel l'évaluation du polynôme inclut un processus du type comprenant l'évaluation d'un premier polynôme pour l'élément $x^p$, l'évaluation d'un second polynôme pour l'élément $x^p$, le produit du second polynôme évalué par l'élément x et la somme dudit produit et du premier polynôme évalué.

8. Procédé d'évaluation selon la revendication 7, dans lequel l'évaluation du premier polynôme est mise en oeuvre par un processus dudit type.

9. Procédé d'évaluation selon la revendication 7 ou 8, dans lequel l'évaluation de chaque polynôme à évaluer inclut un processus dudit type.

10. Procédé d'évaluation selon l'une des revendications 1 à 9 mis en oeuvre au sein d'un microprocesseur.

11. Procédé d'évaluation selon l'une des revendications 1 à 10, dans lequel l'élément est une donnée codée sur une pluralité de bits.

12. Procédé d'évaluation selon l'une des revendications 1 à 11, dans lequel le corps est un corps de Galois $F_2{}^n$, avec n supérieur ou égal à 2.

13. Procédé d'évaluation selon la revendication 12, dans lequel n est égal à 8.

14. Dispositif d'évaluation d'une fonction d'un corps fini de caractéristique p sur lui-même, en un élément x du corps, avec évaluation, pour ledit élément x, d'un polynôme formé d'une pluralité de monômes, comprenant :

- des moyens de détermination de monômes dont le degré est une puissance entière de la caractéristique p au moyen d'élévations successives de l'élément x à la puissance p ;
- des moyens de détermination de monômes dont le degré est différent d'une puissance entière de la caractéristique p sur la base des monômes déterminés, dont le degré est une puissance entière de la caractéristique p, et au moyen d'au moins une multiplication.

15. Dispositif d'évaluation selon la revendication 14, dans lequel ladite multiplication vise un premier élément et un second élément du corps fini, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, le dispositif comprenant :

- des moyens d'obtention, pour chaque couple formé d'un premier entier compris entre 1 et d et d'un second entier strictement supérieur au premier entier, d'une valeur :

  o par tirage d'une valeur aléatoire associée au couple ;
  o par première addition de ladite valeur aléatoire et du produit de la première valeur associée au premier

# EP 2 391 052 A1

entier et de la seconde valeur associée au second entier ;

o par seconde addition du résultat de la première addition et du produit de la première valeur associée au second entier et de la seconde valeur associée au premier entier ;

- des moyens de détermination, pour chaque entier compris entre 1 et d, de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

EP 2 391 052 A1

**Fig. 1**

**Fig. 2**

Europäisches
Patentamt

European
Patent Office

Office européen
des brevets

**RAPPORT DE RECHERCHE EUROPEENNE**

Numéro de la demande

EP 11 16 7594

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MUN-KYU LEE ET AL: "Efficient Exponentiation in GF(pm) Using the Frobenius Map", 1 janvier 2006 (2006-01-01), COMPUTATIONAL SCIENCE AND ITS APPLICATIONS - ICCSA 2006 LECTURE NOTES IN COMPUTER SCIENCE;;LNCS, SPRINGER, BERLIN, DE, PAGE(S) 584 - 593, XP019032188, ISBN: 978-3-540-34077-5 | 1,4-6, 10-14 | INV. H04L9/00 |
| Y | * sections 1 and 4 * | 2,7-9 | |
| A | | 3,15 | |
| | ----- | | |
| X | GORDON D M: "A SURVEY OF FAST EXPONENTIATION METHODS", JOURNAL OF ALGORITHMS, ACADEMIC PRESS INC., ORLANDO, FL, US, vol. 27, no. 1, 1 avril 1998 (1998-04-01), pages 129-146, XP000986921, ISSN: 0196-6774, DOI: DOI:10.1006/JAGM.1997.0913 | 1,4-6, 10-14 | |
| Y | * section 4.1 * | 2,7-9 | DOMAINES TECHNIQUES RECHERCHES (IPC) |
| A | | 3,15 | H04L G06F |
| | ----- | | |
| X | DONALD E KNUTH ED - KNUTH D E: "Factorization of Polynomials", 1 octobre 2005 (2005-10-01), THE ART OF COMPUTER PROGRAMMING. VOL. 2 : SEMINUMERICAL ALGORITHMS, BOSTON, MA : ADDISON-WESLEY, US, PAGE(S) 439,461-466, XP007917142, ISBN: 978-0-201-89684-8 | 1,4-14 | |
| Y | * pages 464,485 * | 2 | |
| A | | 3,15 | |
| | ----- | | |
| Y | US 2006/120527 A1 (BAEK YOO-JIN [KR]) 8 juin 2006 (2006-06-08) | 2 | |
| A | * pages 1-5; figures 5,6 * | 1,3-15 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 26 septembre 2011 | Billet, Olivier |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

................................................................
& : membre de la même famille, document correspondant

EPO FORM 1503 03.82 (P04C02)

| Europäisches Patentamt / European Patent Office / Office européen des brevets | RAPPORT DE RECHERCHE EUROPEENNE | Numéro de la demande<br>EP 11 16 7594 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SVETLA NIKOVA ET AL: "Secure Hardware Implementation of Non-linear Functions in the Presence of Glitches", 3 décembre 2008 (2008-12-03), INFORMATION SECURITY AND CRYPTOLOGY Â ICISC 2008, SPRINGER BERLIN HEIDELBERG, BERLIN, HEIDELBERG, PAGE(S) 218 - 234, XP019115797, ISBN: 978-3-642-00729-3 * sections 3 and 4 * | 1-15 | |
| A | KAI SCHRAMM ET AL: "Higher Order Masking of the AES", 1 janvier 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 208 - 225, XP019026783, ISBN: 978-3-540-31033-4 * section 3,figure 8 * | 1-15 | |
| Y,D | EVE J: "The evaluation of polynomials", NUMERISCHE MATHEMATIK, SPRINGER VERLAG, BERLIN, DE, vol. 6, no. 1, 1 janvier 1964 (1964-01-01), pages 17-21, XP009143832, ISSN: 0029-599X, DOI: 10.1007/BF01386049 * sections 1 et 2 * | 7-9 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 26 septembre 2011 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 16 7594

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-09-2011

| Document brevet cité au rapport de recherche | Date de publication | Membre(s) de la famille de brevet(s) | Date de publication |
|---|---|---|---|
| US 2006120527 A1 | 08-06-2006 | CN 1758591 A | 12-04-2006 |
| | | EP 1557740 A2 | 27-07-2005 |
| | | KR 20050076015 A | 26-07-2005 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. REVY.** Analyse et implantation d'algorithmes rapides pour l'évaluation polynomiale sur les nombres flottants. *Laboratoire de l'Informatique du Parallélisme,* 2006

- Finite fields. **RUDOLPH LIDL ; HARALD NIEDER-REITER.** Encyclopedia of mathematics and its applications. Cambridge University Press, 1997, vol. 20
- **J. EVE.** The Evaluation of Polynomials. *Numerische Mathematik,* 1964, vol. 6, 17-21